# FASCICULE DE BREVET EUROPEEN

(11) **EP 3 180 109 B1**
(45) Date de publication et mention de la délivrance du brevet: **24.02.2021**
(21) Numéro de dépôt: 15753393.6
(22) Date de dépôt: 21.07.2015
(51) Int. Cl.: B01D 63/06, B01D 46/24, B01D 65/08, C04B 38/00, B01J 35/04, C04B 35/01, C04B 35/10, C04B 35/46, C04B 35/48, C04B 35/56, C04B 35/58, C04B 35/581, C04B 35/583, C04B 111/00, C04B 35/565

(54) **NOUVELLES GEOMETRIES D'ELEMENTS TUBULAIRES MULTICANAUX DE SEPARATION PAR FLUX TANGENTIEL INTEGRANT DES PROMOTEURS DE TURBULENCES ET PROCEDE DE FABRICATION**
NEUARTIGE GEOMETRIEN VON MEHRKANALIGEN ROHRFÖRMIGEN ELEMENTEN ZUR TRENNUNG ÜBER TANGENTIALDURCHFLUSS UND MIT EINGEBAUTEN TURBULENZPROMOTOREN SOWIE HERSTELLUNGSVERFAHREN
NOVEL GEOMETRIES OF MULTICHANNEL TUBULAR ELEMENTS INTENDED FOR SEPARATION VIA TANGENTIAL FLOW AND HAVING BUILT-IN TURBULENCE PROMOTERS, AND MANUFACTURING METHOD

(30) Priorité: 11.08.2014 FR 1457744
(43) Date de publication de la demande: 21.06.2017
(73) Titulaire: Technologies Avancees et Membranes Industrielles, 26110 Nyons (FR)
(72) Inventeur: ANQUETIL, Jérôme, F-84110 Vaison la Romaine (FR)
(74) Mandataire: Cabinet Beau de Loménie
(86) Numéro de dépôt international: PCT/FR2015/051998
(87) Numéro de publication internationale: WO 2016/024056

(56) Documents cités:
- EP-A1- 0 813 445
- WO-A1-2012/032325
- WO-A1-2013/144399
- FR-A1- 2 503 615
- GB-A- 2 223 690

## Description

La présente invention concerne le domaine technique des éléments de séparation par flux tangentiel d'un milieu fluide à traiter en un filtrat et un rétentat, communément appelés membranes de filtration. Plus précisément, l'invention concerne de nouvelles géométries de support poreux multicanaux permettant de réduire, voire supprimer, les problèmes de colmatage, ainsi qu'un procédé de fabrication par méthode additive de tels supports et éléments de séparation par flux tangentiel les comprenant.

Les procédés de séparation utilisant des membranes sont utilisés dans de nombreux secteurs, notamment dans l'environnement pour la production d'eau potable et le traitement des effluents industriels, dans l'industrie chimique, pétrochimique, pharmaceutique, agro-alimentaire et dans le domaine de la biotechnologie.

Une membrane constitue une barrière sélective et permet, sous l'action d'une force de transfert, le passage ou l'arrêt de certains composants du milieu à traiter. Le passage ou l'arrêt des composants résulte de leur taille par rapport à la taille des pores de la membrane qui se comporte alors comme un filtre. En fonction de la taille des pores, ces techniques sont nommées microfiltration, ultrafiltration ou nanofiltration.

Il existe des membranes de structures et textures différentes. Les membranes sont, en général, constituées d'un support poreux qui assure la résistance mécanique de la membrane et donne également la forme et donc détermine la surface filtrante de la membrane. Sur ce support, une ou plusieurs couches de quelques microns d'épaisseur assurant la séparation et dites couches séparatrices, couches de filtration, couches de séparation, ou couches actives, sont déposées. Durant la séparation, le transfert du fluide filtré s'effectue à travers la couche séparatrice, puis ce fluide se répand dans la texture poreuse du support pour se diriger vers la surface extérieure du support poreux. Cette partie du fluide à traiter ayant traversé la couche de séparation et le support poreux est appelée perméat ou filtrat et se trouve récupérée par une chambre de collecte entourant la membrane. L'autre partie est appelée rétentat et est, le plus souvent, réinjectée dans le fluide à traiter en amont de la membrane, grâce à une boucle de circulation.

De manière classique, le support est d'abord fabriqué selon la forme souhaitée par extrusion, puis fritté à une température et pendant un temps suffisant pour assurer la solidité requise, tout en conservant dans la céramique obtenue la texture poreuse ouverte et interconnectée voulue. Ce procédé contraint à l'obtention d'un ou plusieurs canaux rectilignes à l'intérieur desquels sont ensuite déposées et frittées la ou les couches séparatrices. Les supports sont traditionnellement de forme tubulaire et comportent un ou plusieurs canaux rectilignes aménagés parallèlement à l'axe central du support. En général, la surface interne des canaux est lisse et ne présente aucune irrégularité.

Or, il a été constaté que les membranes de filtration fabriquées à partir de supports ayant de telles géométries se heurtent à des problèmes de colmatage et présentent, de ce fait, des performances limitées en termes de débit. En effet, les petites particules et les macromolécules peuvent être adsorbées sur la surface de la couche séparatrice ou s'y déposer en formant un gel ou un dépôt, elles peuvent même pénétrer dans la porosité et bloquer certains pores.

Le principe de toute séparation tangentielle mettant en œuvre des éléments de filtration réside dans un transfert sélectif dont l'efficacité est dépendante de la sélectivité de la membrane (la couche active) et de la perméabilité (flux) de l'élément de filtration considéré dans son entier (support + couche active). La sélectivité et la perméabilité ne sont pas seulement déterminées par les caractéristiques de la couche active et de l'élément de filtration car elles peuvent être réduites ou limitées par l'apparition d'une polarisation de concentration, d'un dépôt et d'un blocage des pores.

Le phénomène de polarisation de concentration opère lors d'une opération de filtration lorsque les macromolécules présentes dans le liquide à traiter se concentrent à l'interface membrane/solution où elles exercent une contre-pression osmotique opposée à la force de séparation ou rétrodiffusent dans le coeur du liquide à traiter selon la loi de Fick. Le phénomène de polarisation de concentration résulte de l'accumulation des composés retenus au voisinage de la membrane du fait de la perméation du solvant.

Le dépôt apparaît lors d'une opération de filtration lorsque la concentration en particules à la surface de la membrane augmente jusqu'à provoquer l'apparition d'une phase condensée sous forme d'un gel ou d'un dépôt cohésif induisant une résistance hydraulique additionnelle à celle de la membrane.

Le blocage des pores opère lorsqu'il y a intrusion de particules de tailles inférieures ou égales à celles des pores, ce qui entraîne une réduction de la surface filtrante.

Le colmatage, sa réversibilité ou son irréversibilité, sont des phénomènes complexes qui dépendent de l'élément de filtration et en particulier des couches séparatrices, du liquide à traiter et des paramètres opératoires.

Le colmatage est un frein important à l'attractivité économique de la filtration car il conduit, lors du dimensionnement des installations de filtration, à accroître les surfaces installées afin de satisfaire les besoins en volumes à traiter d'une part et il rend nécessaire la mise en œuvre de moyens techniques spécifiques pour y remédier *a postériori*, tels des cycles de nettoyage utilisant des détergents ou des rétro-filtrations périodiques d'autre part.

Dans l'art antérieur, il a déjà été proposé de réduire le phénomène de colmatage par la création d'un régime d'écoulement turbulent à l'intérieur du canal d'un élément filtrant.

Tout d'abord, il a été proposé d'introduire dans les éléments tubulaires, de filtration des dispositifs destinés à créer des turbulences. On peut notamment se référer à D.M. Krstic et al., Journal of Membrane Science 208 (2002) 303-314. Ces dispositifs permettent d'améliorer le flux de perméat, et par conséquent l'efficacité de la filtration, en limitant le colmatage. Cependant, la mise en place et la fixation de ces dispositifs dans les éléments tubulaires sont difficiles et complexes. De plus, ils provoquent des vibrations gênantes qui nuisent à la fiabilité du matériel.

D'autres systèmes assez complexes ont également été proposés par M.Y. Jaffrin dans Journal of Membrane Science 324 (2008) 7-25 et utilisent des membranes circulaires et un module central qui tournent de manière relative pour créer des turbulences. Ces travaux ont cependant démontré que le taux de cisaillement important obtenu permet de diminuer le colmatage.

D'autres solutions consistent à modifier la géométrie de l'élément tubulaire. Le brevet FR 2 503 615 décrit des tubes cylindriques pour la filtration de mélanges gazeux introduits sous pression, dont la paroi interne comporte des empreintes destinées à créer des turbulences qui évitent l'accumulation d'une des phases gazeuses sur la paroi du tube et améliorent la séparation par diffusion gazeuse. Ces empreintes sont formées en faisant passer les tubes sortant de la filière d'extrusion, entre des rouleaux ou des outils qui déforment localement le tube sur toute l'épaisseur de sa paroi. Le brevet FR 2 503 616 décrit un procédé relevant du même principe, consistant à déformer la paroi du tube à la sortie de la filière d'extrusion par application de molettes disposées face à face, de part et d'autre du tube, ou en positions alternées.

Dans ces deux documents, après l'étape préalable d'extrusion du tube monocanal, une étape de mise en forme finale est donc mise en œuvre par déformation plastique pour l'obtention d'empreintes à l'intérieur du monocanal par la pression d'un poinçon rotatif ou autre sur la surface externe du tube. L'obtention de ces « empreintes » sera plus ou moins facile selon la ductilité du matériau, c'est-à-dire son aptitude à subir une déformation permanente sans se rompre. Or, les pâtes utilisées pour la fabrication de membranes céramiques ne présentent pas une bonne ductilité : elles sont facilement mises en forme par extrusion mais présentent en général un allongement à la rupture inférieur à 5%. De plus, avec de telles techniques, seules des empreintes de faibles dimensions peuvent être obtenues. Enfin, les déformations réalisées sur toute l'épaisseur du tube entraînent des contraintes importantes dans le matériau et des risques de fissuration, ce qui nuit donc fortement à la résistance mécanique.

On peut également citer la demande FR 2 736 843 qui propose des tubes poreux comportant un unique canal dont les parois comportent des empreintes, alors que la paroi périphérique du support est lisse. Pour cela, le tube poreux est mis en forme, au moyen d'une filière d'extrusion qui comporte une broche cylindrique disposée suivant son axe, la broche ou la matrice de sortie de la filière étant montée rotative et de section non circulaire. Là encore, cette technique de fabrication est limitée à certains types d'empreintes, à savoir des empreintes qui sont continues d'une extrémité à l'autre de l'élément de séparation et qui ne peuvent engendrer aucune variation de la section de passage du canal. De plus, elle ne peut être transposée à la fabrication d'élément de séparation comportant une série de canaux internes. Or, les éléments de séparation multicanaux sont de plus en plus recherchés car ils permettent d'augmenter la surface filtrante et d'ainsi améliorer les performances.

Dans le même ordre d'idées, le brevet EP 0 813 445 décrit un élément de filtration avec un ou plusieurs canaux comportant chacun une rainure hélicoïdale à pas simple, double ou triple. Cet élément de filtration présente les mêmes inconvénients que l'élément de filtration décrit par le document FR 2 736 843. GB 2 223 690 décrit des structures monolithiques avec une section transversale du canal en forme d'étoile dans une configuration spirale qui peut aller jusqu'à 500 tours par mètre.

Dans ce contexte, la présente invention se propose de fournir de nouveaux éléments de filtration et une technique de fabrication adaptée à leur élaboration, qui présentent une structure multicanale et une géométrie adaptée pour réduire, voire supprimer, les phénomènes de colmatage. L'invention a pour but de fournir de nouveaux éléments de filtration dont la géométrie peut être modulée à façon, pour créer de fortes contraintes de cisaillement pariétales et d'intenses turbulences à l'intérieur des canaux, sans présenter les inconvénients des solutions antérieures.

Pour atteindre un tel objectif, l'invention concerne un élément monolithe de séparation par flux tangentiel d'un milieu fluide à traiter en un filtrat et un rétentat décrit dans les revendications 1 à 10, ledit élément de séparation comportant un support poreux rigide monolithique de structure rectiligne, dans lequel sont aménagés plusieurs canaux pour la circulation du milieu fluide à traiter entre une entrée et une sortie pour le rétentat, en vue de récupérer un filtrat au niveau de la surface extérieure du support.
- Selon l'invention, le support poreux rigide monolithique délimite, à partir des parois internes desdits canaux, des obstacles à la circulation du fluide à traiter qui présentent une identité et une continuité de matériau et de texture poreuse avec le support les obstacles génèrant des variations des sections de passage des canaux.

De plus, l'élément selon l'invention peut présenter en outre en combinaison au moins l'une et/ou l'autre des caractéristiques additionnelles suivantes :
- au moins une couche séparatrice continûment déposée sur les parois internes des canaux et venant recouvrir entièrement les obstacles ;
- le nombre, la forme et les dimensions des obstacles sont adaptés pour promouvoir des écoulements en régime turbulent et faire apparaître des cisaillements et des recirculations suffisantes pour réduire, voire supprimer, les dépôts et le colmatage des pores de la couche filtrante au niveau des parois internes des canaux ;
- les obstacles correspondent à des reliefs discontinus aménagés sur les parois internes des canaux ;
- les obstacles ont leur surface de contact pour le fluide à filtrer située vers l'entrée qui est inclinée dans le sens de circulation du fluide à traiter ;
- les obstacles présentent une hauteur supérieure génèrent des variations de la section de passage du canal si au moins l'un des trois critères suivants varie à savoir, l'aire de la section droite, la forme de la section droite, les dimensions de la section droite du canal ;
- le support poreux est réalisé en un matériau organique ou inorganique ;
- un support poreux et au moins une couche séparatrice continûment déposée sur les parois internes des canaux et venant recouvrir entièrement les obstacles, chacun constitués d'une céramique, choisi parmi les oxydes, les nitrures, les carbures ou d'autres matériaux céramiques et leur mélanges, et, en particulier, d'oxyde de titane, d'alumine, de zircone ou d'un de leur mélange, de nitrure de titane, de nitrure d'aluminium, de nitrure de bore, de carbure de silicium éventuellement en mélange avec un autre matériau céramique ;
- le support présente un diamètre moyen de pores appartenant à la gamme allant de 4 µm à 40 µm ;
- le diamètre moyen de pores correspond à la valeur d50 de la distribution volumique, pour laquelle 50% du volume total des pores correspondent au volume des pores de diamètre inférieur à ce d50 ; la distribution volumique étant obtenue par pénétration de mercure, par exemple selon la technique décrite dans la norme ISO 15901-1 :2005 ;
- la surface extérieure du support poreux présente un profil constant. Un autre objet de l'invention est de proposer un procédé permettant de réaliser des éléments monolithes de séparation conformes à l'invention.

Le procédé de fabrication d'un élément de séparation par flux tangentiel selon l'invention dans lequel la structure tridimensionnelle du support est réalisée par formation de strates élémentaires superposées et liées successivement entre elles, de manière à faire croître progressivement la forme tridimensionnelle souhaitée, tel que défini dans les revendications 11 à 16.

De plus, l'élément selon l'invention peut consister en outre en combinaison au moins l'une et/ou l'autre des caractéristiques additionnelles suivantes :
- à réaliser la structure dimensionnelle, par répétition des étapes suivantes :
   - réalisation d'un lit continu d'une matière destinée à former le support poreux, le lit étant d'épaisseur constante selon une surface supérieure à la section dudit support poreux prise au niveau de la strate ;
   - consolidation localisée selon un motif déterminé pour chaque strate, d'une partie de matière réalisée pour créer la strate élémentaire, et liaison simultanée de la strate élémentaire ainsi formée à la strate précédente ;
- à réaliser un lit continu d'une matière solide se présentant sous la forme d'une poudre organique ou inorganique ;
- à réaliser un lit continu d'un milieu se présentant sous la forme d'un précurseur liquide photopolymérisable dans lequel a été disposée une poudre inorganique ;
- chaque strate est réalisée par fusion continue ou discontinue d'un fil d'un précurseur solide thermofusible qui est soit un polymère organique thermofusible utilisé seul pour réaliser un support organique et une couche organique, ou soit un mélange d'un polymère organique thermofusible et d'une poudre inorganique céramique, pour réaliser un support de nature inorganique ;
- à créer successivement des cordons de matière par projection d'une poudre fondue dans le faisceau d'un laser.

La présente invention a également pour objet les éléments de séparation par flux tangentiel obtenus par le procédé défini dans le cadre de l'invention. Le fait que la croissance de la structure tridimensionnelle du support ait été menée, conformément à l'invention, peut être mis en évidence par la visualisation des différentes strates par microscopie optique ou microscopie électronique à balayage. Bien entendu, il sera recherché que la démarcation entre les différentes strates soit la plus ténue possible.

La description qui va suivre, en référence aux Figures annexées, permet de mieux comprendre l'invention,
La **Figure 1** est une vue en perspective d'un élément de séparation conforme à l'invention comportant huit canaux de circulation pour le fluide à traiter et munis d'obstacles pariétaux localisés de forme oblongue ou en grain de riz.
La **Figure 2A** est une vue en perspective d'un élément de séparation conforme à l'invention montrant un autre exemple de réalisation des obstacles sous la forme de murets aménagés à l'intérieur de huit canaux de circulation pour le fluide à traiter.
La **Figure 2B** est une vue en coupe longitudinale de l'élément de séparation illustré à la **Fig. 2A****.**
La **Figure 3** est une vue en perspective d'un élément de séparation conforme à l'invention montrant un autre exemple de réalisation des obstacles sous la forme de bâtons aménagés à l'intérieur de sept canaux de circulation pour le fluide à traiter.
La **Figure 4** est une vue en perspective d'un élément de séparation conforme à l'invention montrant un autre exemple de réalisation des obstacles sous la forme d'une hélice pariétale aménagée à l'intérieur de huit canaux de circulation pour le fluide à traiter.

En préliminaire, quelques définitions des termes utilisés dans le cadre de l'invention vont être données.

Par taille moyenne des grains, on entend la valeur d50 d'une distribution volumique pour laquelle 50% du volume total des grains correspondent au volume des grains de diamètre inférieur à ce d50. La distribution volumique est la courbe (fonction analytique) représentant les fréquences des volumes des grains en fonction de leur diamètre. Le d50 correspond à la médiane séparant en deux parties égales, l'aire située sous la courbe des fréquences obtenue par granulométrie, par diffraction laser qui est la technique de référence retenue dans le cadre de l'invention pour la mesure du diamètre moyen des grains. On se réfèrera, en particulier, pour la technique de mesure du d50 :
- à la norme ISO 13320:2009, pour ce qui concerne la technique de mesure par granulométrie laser ;
- à la norme ISO 14488:2007, pour ce qui concerne les techniques d'échantillonnage de la poudre analysée ;
- à la norme ISO 14887:2000, pour ce qui concerne une mise en dispersion reproductible de l'échantillon de poudre dans le liquide avant la mesure par granulométrie laser.

Par diamètre moyen de pores, on entend la valeur d50 d'une distribution volumique pour laquelle 50% du volume total des pores correspondent au volume des pores de diamètre inférieur à ce d50. La distribution volumique est la courbe (fonction analytique) représentant les fréquences des volumes des pores en fonction de leur diamètre. Le d50 correspond à la médiane séparant en deux parties égales, l'aire située sous la courbe des fréquences obtenue par pénétration de mercure, pour des diamètres moyens de l'ordre de quelques nm ou, dans le cas de diamètre de pores plus faibles, par adsorption de gaz, et notamment de N₂, ces deux techniques étant retenues comme références dans le cadre de l'invention pour la mesure du diamètre moyen des pores.

En particulier, on pourra utiliser les techniques décrites dans :
- la norme ISO 15901-1 :2005, pour ce qui concerne la technique de mesure par pénétration de mercure ;
- les normes ISO 15901-2 :2006 et ISO 15901-3 :2007, pour ce qui concerne la technique de mesure par adsorption de gaz.

L'invention propose des éléments de séparation par flux tangentiel d'un milieu fluide à traiter en un filtrat et un rétentat, qui comporte un support poreux monolithique multicanaux dont la géométrie est sélectionnée pour délimiter, à partir des parois internes des canaux, des obstacles à la circulation du fluide à filtrer. De tels supports monolithiques dont les obstacles font partie intégrante de la structure poreuse monolithique ne peuvent être réalisés, ni par les techniques proposées dans l'art antérieur pour les supports monocanaux comportant des promoteurs de turbulence, ni par la technique traditionnelle d'extrusion utilisée pour la fabrication d'éléments multicanaux. Dans le cadre de l'invention, il est proposé de réaliser de tels supports poreux monolithiques, voire la totalité de l'élément de séparation (donc y compris les couches séparatrices), par technique additive.

Dans le cadre de l'invention, on vise des éléments de séparation d'un milieu fluide par filtration tangentielle, communément appelés membranes de filtration. De tels éléments de séparation comportent un support poreux dans lequel différents canaux de circulation pour le fluide à filtrer sont aménagés. Classiquement, le support est de forme tubulaire. Ces canaux de circulation présentent une entrée et une sortie. En général, l'entrée des canaux de circulation est positionnée à l'une des extrémités, cette extrémité jouant le rôle de zone d'entrée pour le milieu fluide à traiter et leur sortie est positionnée à l'autre extrémité du support jouant le rôle de zone de sortie pour le rétentat.

Dans de tels éléments de séparation, le corps constituant le support présente une texture poreuse. Cette texture poreuse est caractérisée par le diamètre moyen des pores déduit de leur distribution mesurée par porométrie par pénétration de mercure.

La texture poreuse du support est ouverte et forme un réseau de pores interconnectés, ce qui permet au fluide filtré par la couche séparatrice de filtration de traverser le support poreux et d'être récupéré en périphérie. Il est d'usage de mesurer la perméabilité à l'eau du support pour qualifier la résistance hydraulique du support. En effet, dans un milieu poreux, l'écoulement stationnaire d'un fluide visqueux incompressible est régi par la loi de Darcy. La vitesse du fluide est proportionnelle au gradient de la pression et inversement proportionnelle à la viscosité dynamique du fluide, via un paramètre caractéristique appelé perméabilité qui peut être mesurée, par exemple, selon la norme française NF X 45-101 de Décembre 1996.

Le perméat est donc, quant à lui, récupéré sur la surface périphérique du support poreux. La paroi des canaux est continûment recouverte par, au moins, une couche séparatrice de filtration qui assure la filtration du milieu fluide à traiter. Les couches séparatrices de filtration, par définition, se doivent d'avoir un diamètre moyen de pores inférieur à celui du support. Les couches séparatrices délimitent la surface de l'élément de séparation par flux tangentiel destinée à être en contact avec le fluide à traiter et sur laquelle va circuler le fluide à traiter.

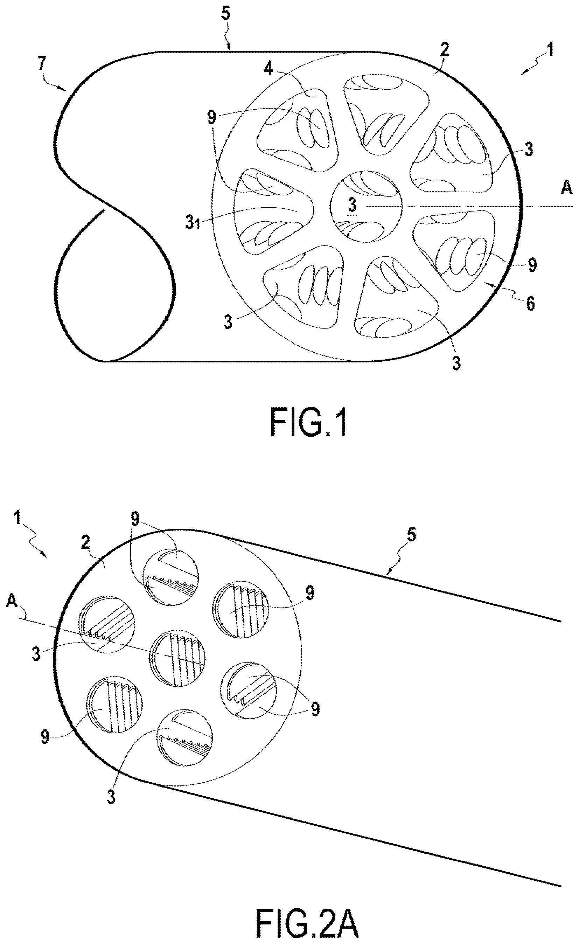

La **Fig. 1** illustre un exemple d'un tel élément de séparation par flux tangentiel **1** de géométrie tubulaire dans laquelle une série de canaux, ont été aménagés, mais bien d'autres formes pourraient être construites avec le procédé selon l'invention. L'élément de séparation par flux tangentiel **1** comporte un support poreux **2** réalisé sous une forme allongée s'étendant selon un axe central longitudinal **A**, c'est pourquoi la structure de ce support poreux est qualifiée de rectiligne. Le support poreux **2** illustré à la **Fig. 1** possède une section droite transversale circulaire et présente ainsi une surface périphérique ou extérieure **5** cylindrique, mais la section droite transversale pourrait être quelconque ou par exemple polygonale. Par section, on entend la figure déterminée par l'intersection d'un volume par un plan, la section droite d'un cylindre étant la figure déterminée par l'intersection d'un plan perpendiculaire à l'axe central longitudinal.

Selon une caractéristique de l'invention, la surface extérieure ou périphérique **5** du support présente un profil constant. En d'autres termes, la surface extérieure **5** ne présente aucune irrégularité de surface autre que celle engendrée par la porosité intrinsèque du matériau ou que celle engendrée par une rugosité de surface inhérente au procédé de mise en forme proprement dit. Ainsi, la surface extérieure **5** ne possède pas de déformation ou d'empreintes Pour rappel, le profil correspond à la forme extérieure du support poreux **2** pris selon un plan transversal contenant l'axe central longitudinal **A.** Dans l'exemple illustré, le profil du support **2** est rectiligne et constant de l'entrée à la sortie. En d'autres termes, un profil constant signifie que toutes les lignes génératrices extérieures parallèles à l'axe central du support sont des droites toutes parallèles entre elles.

Le support poreux **2** est aménagé pour comporter une série de canaux **3** qui s'étendent parallèlement à l'axe **A** du support. Dans l'exemple illustré à la **Fig. 1**, ces canaux sont au nombre de huit. Bien entendu, le nombre de canaux **3** aménagé dans le support poreux **2** peut être différent. De même, la section droite transversale des canaux **3** peut présenter diverses formes identiques ou différentes. Dans l'exemple illustré à la **Fig**. **1**, sept canaux **3** situés en périphérie présentent une section droite transversale triangulaire et un canal **3** central possède une section droite transversale circulaire.

Les canaux **3** présentent chacun une surface recouverte par, au moins, une couche séparatrice **4,** destinée à être en contact avec le milieu fluide à traiter, circulant à l'intérieur des canaux **3.** Une partie du milieu fluide traverse la couche séparatrice **4** et le support poreux **2,** de sorte que cette partie traitée du fluide, appelée perméat, s'écoule par la surface extérieure **5** du support poreux. Le fluide à filtrer circule entre une zone d'entrée et une zone de sortie. Dans l'exemple illustré, la zone d'entrée **6** est située à une extrémité du support tubulaire et la zone de sortie **7** à l'autre extrémité.

Les épaisseurs des couches séparatrices de filtration varient typiquement entre 1 et 100 µm d'épaisseur. Bien entendu, pour assurer sa fonction de séparation, et servir de couche active, les couches séparatrices présentent un diamètre moyen de pores inférieur au diamètre moyen de pores du support. Le plus souvent, le diamètre moyen de pores des couches séparatrices de filtration est au moins inférieur d'un facteur 3, et de préférence, d'au moins un facteur 5 par rapport à celui du support.

Les notions de couche séparatrice de microfiltration, ultrafiltration et nanofiltration sont bien connues de l'homme de l'art. Il est généralement admis que :
- les couches séparatrices de microfiltration présentent un diamètre moyen de pores compris entre 0,1 et 2 µm ;
- les couches séparatrices d'ultrafiltration présentent un diamètre moyen de pores compris entre 0,1 et 0,01 µm ;
- les couches séparatrices de nanofiltration présentent un diamètre moyen de pores compris entre 0,5 et 2 nm.

Il est possible que cette couche de micro ou d'ultrafiltration dite couche active soit déposée directement sur le support poreux (cas d'une couche de séparation monocouche), ou encore sur une couche intermédiaire de diamètre moyen de pores moindre, elle-même déposée directement sur le support poreux (cas d'une couche de séparation monocouche). La couche de séparation peut, par exemple, être à base de, ou constituée exclusivement, d'un ou plusieurs oxyde métallique, carbure ou nitrure ou autres céramiques. En particulier, la couche de séparation sera à base de, ou constituée exclusivement de TiO₂, Al₂O₃ et ZrO₂, seul ou en mélange.

Selon une caractéristique essentielle de l'invention, le support est façonné pour comporter une série d'obstacles **9**, partant des parois internes **3₁**, des canaux **3** qui sont aptes à générer des perturbations dans l'écoulement et des forces de cisaillement d'amplitude suffisante pour faire apparaître des recirculations, limitant ainsi, voire même évitant totalement, les phénomènes de colmatage. Les obstacles **9** font partie intégrante du support poreux monolithique, c'est-à-dire qu'ils résultent de la géométrie même donnée au support poreux et ne sont nullement des éléments rapportés. L'ensemble support et obstacles forme un même monolithique poreux, sans liaison, ni interface, ni joint d'aucune sorte. Il existe une identité de matériau et de texture poreuse entre les obstacles et le support poreux ainsi qu'une continuité de matériau et de texture poreuse entre les obstacles et le support poreux. Ainsi, les obstacles **9** sont solides mécaniquement et chimiquement d'égale résistance que le support **2.** Les obstacles **9** sont recouverts entièrement par la couche séparatrice, de sorte qu'ils ne réduisent pas, mais au contraire augmentent, la surface filtrante de l'élément de séparation.

L'identité de matériaux entre les obstacles **9** et le support **2** s'entend d'une nature chimique en tous points identiques, c'est-à-dire identique dans le support poreux et les obstacles.

L'identité de texture poreuse s'entend de la porosité, de la tortuosité, taille et distribution des pores en tous points identiques de l'élément, à savoir dans les obstacles et le support poreux.

La continuité de matériau s'entend de la nature chimique en tous points de l'élément identique c'est-à-dire qu'il n'existe aucune discontinuité chimique entre l'obstacle et le support poreux.

La continuité de texture poreuse s'entend de la porosité, tortuosité, taille et distribution des pores en tous points identiques de l'élément de sorte que n'apparaît aucune discontinuité de texture poreuse entre l'obstacle et le support poreux.

Les obstacles ont pour rôle de se trouver sur le trajet du fluide qui circule à l'intérieur des canaux **3**. Les obstacles **9** gênent ou perturbent le passage du fluide à traiter, obligeant leur contournement, en apparaissant entre deux positions prises selon l'axe longitudinal **A** du canal. Les obstacles entraînent ainsi des augmentations de la vitesse de circulation du liquide au droit de chacun d'eux générant de fortes contraintes de cisaillement pariétales et des zones de turbulences où les phénomènes de colmatage sont réduits voire même supprimés. Les obstacles jouent le rôle de promoteurs de turbulences. Le nombre, la forme, et les dimensions des obstacles **9** sont adaptés pour promouvoir des écoulements en régime turbulent et faire apparaître des cisaillements et des recirculations suffisantes pour réduire, voire supprimer, les dépôts et le colmatage des pores au niveau des parois internes des canaux.

De manière préférée, afin de favoriser un dépôt adéquat de la couche séparatrice sur l'obstacle **9,** ce dernier présentera une forme arrondie. En particulier, l'obstacle prendra naissance sur la paroi soit perpendiculairement à la paroi, soit avec un angle de raccordement inférieur à 90°, soit grâce à des congés de raccordement présentant des rayons de courbure compris entre 0,1 fois et 0,9 fois la hauteur de l'obstacle **9.**

Les obstacles **9** peuvent être présents à intervalles réguliers ou irréguliers. Deux ou plus de deux obstacles **9,** quand leur morphologie et leur dimension le permettent, peuvent être présents au niveau d'une même section droite du canal. Les nouvelles géométries de support envisagées dans la présente invention, présentent une répétition d'un ou de plusieurs obstacles démarrant de la paroi de chaque canal dont ils sont solidaires.

En particulier, les parois internes des canaux intégrant les obstacles **9** peuvent comporter des reliefs tels que des creux, des bosses, des cannelures, des stries et/ou toutes autres morphologies capables d'agir comme autant d'obstacles jouant le rôle de promoteurs de turbulences lors de l'écoulement du fluide à l'intérieur desdits canaux.

Selon une variante de réalisation, les obstacles **9** génèrent des variations des sections de passage des canaux permettant d'accroître les turbulences.

Dans le cadre de la présente invention, une section de passage d'un canal est définie comme étant la section droite dudit canal prise perpendiculairement à l'axe longitudinal du canal. Cette section droite du canal est considérée comme variable suivant son axe longitudinal si au moins l'un des trois critères suivants varie :
- aire de la section droite du canal ;
- forme de la section droite du canal ;
- dimensions de la section droite du canal.

Par exemple, les obstacles **9** génèrent une diminution de l'aire de la section de passage du canal **3**, par rapport à la section de passage maximale comprise entre 1 % et 50 %.

Par exemple, les obstacles **9** présentent une hauteur prise selon une direction diamétrale perpendiculaire à l'axe longitudinal **A** qui est supérieure à leur largeur divisée par deux, (la largeur étant prise selon l'autre direction diamétrale perpendiculaire à l'axe longitudinal **A**).

Les **Fig. 1 à 4** donnent des exemples de réalisation d'obstacles **9** aménagés dans des canaux **3** réalisés dans un élément de séparation **1.** Bien entendu, le nombre et la forme des canaux **3** sont donnés à titre d'exemple illustratif mais il est clair que le nombre et la forme des canaux peuvent être différents des exemples illustrés.

Dans l'exemple illustré à la **Fig. 1**, les obstacles **9** sont des reliefs s'étendant en saillie à partir de la paroi interne **3₁** du support et présentant une forme demi ovoïde ou en demi grain de riz. Les obstacles **9** sont disposés successivement selon plusieurs rangées au nombre de trois dans l'exemple illustré, s'étendant parallèlement à l'axe longitudinal **A** du canal **3**. De préférence, les obstacles **9** des rangées sont décalés le long de l'axe longitudinal du canal, de sorte que les obstacles appartenant à des rangées différentes ne sont pas positionnés en vis-à-vis.

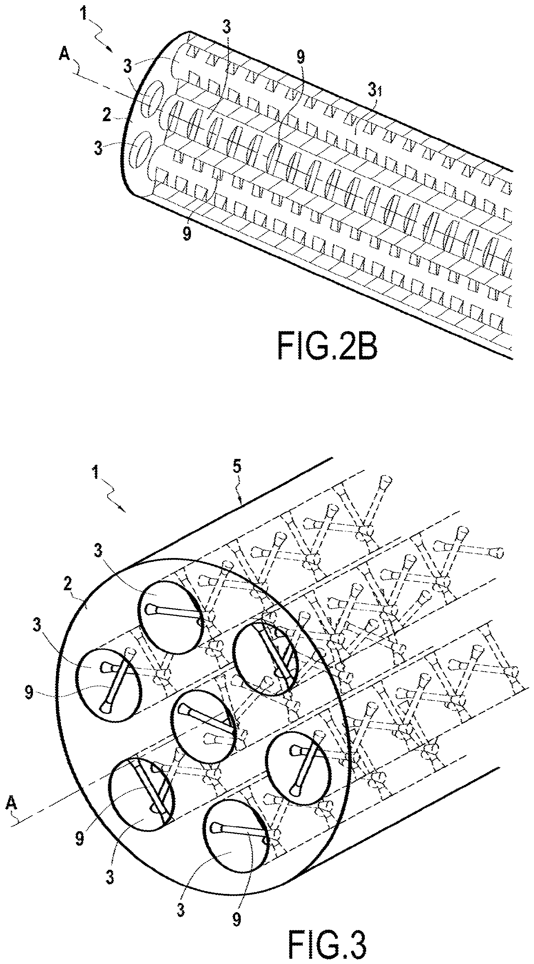

Les **Fig. 2A** et **2B** illustrent une autre variante de réalisation, dans laquelle chaque canal **3** du support **2** comporte des obstacles **9** s'étendant radialement à partir de la paroi interne **3₁** du support en étant distribués le long de l'axe longitudinal **A** selon une répartition déterminée. Dans l'exemple illustré aux **Fig. 2A****,** **2B****,** les obstacles **9** sont aménagés le long de l'axe longitudinal du canal **3** selon une alternance de 180°. Bien entendu, une alternance de valeurs différentes par exemple égales à 90° ou à 45° peut être envisagée.

Chaque obstacle **9** est réalisé par un mur, muret ou relief, avec un profil en secteur de disque. De préférence, la hauteur de l'obstacle **9** est inférieure au demi-diamètre du canal **3.**

Dans l'exemple illustré à la **Fig. 3****,** le support **2** comporte sept canaux dans lesquels des obstacles **9** sont réalisés sous la forme de barreaux ou de bâtons s'étendant diamétralement à l'intérieur des canaux **3** à partir de deux parties de la paroi situées en vis-à-vis.

Les obstacles **9** sont disposés à l'intérieur des canaux **3** selon l'axe longitudinal des canaux, à intervalles par exemple réguliers, en étant décalés entre eux d'une valeur angulaire déterminée constante. Par exemple, les obstacles **9** sont décalés angulairement entre eux d'une valeur égale à 90°. Bien entendu, l'alternance angulaire entre les obstacles **9** peut présenter une valeur différente. De même, le pas entre les obstacles **9** pris selon l'axe longitudinal du canal peut être variable.

Dans l'exemple illustré, chaque barreau **9** possède une section droite transversale sensiblement constante sur la majeure partie de sa longueur et se trouve raccordé à la paroi interne **3₁** à chacune de ses extrémités par une partie s'évasant jusqu'à la paroi interne.

Bien entendu, il peut être prévu un mode de réalisation des barreaux qui s'étendent selon une partie seulement du diamètre en étant raccordé par une seule extrémité à la paroi interne **3₁** du support.

Dans le même sens, ces obstacles diamétraux **9** peuvent prendre des formes différentes telles que sphérique, ovoïde ou oblongue par exemple.

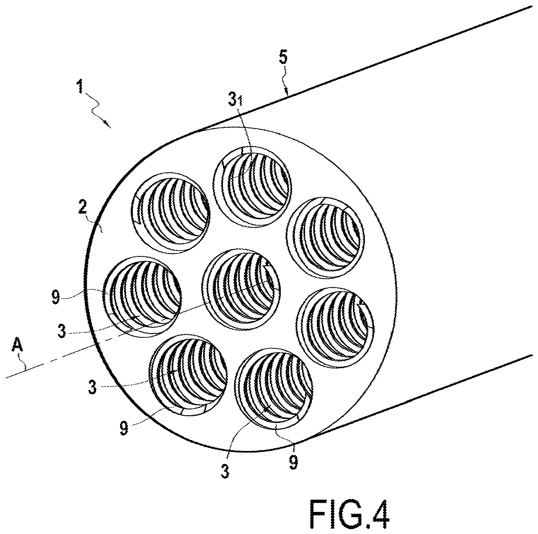

La **Fig. 4** illustre une autre variante de réalisation d'un support **2** à huit canaux **3** de section circulaire, comportant dans chaque canal, un obstacle **9** se présentant sous la forme d'une hélice aménagée sur la paroi interne **3₁** du support. Par exemple, les obstacles **9** en forme d'hélice sont réalisés de manière discontinue de manière à faire apparaître des tronçons en forme d'hélice. Il est à noter qu'il peut être prévu de réaliser dans chaque canal **3,** plusieurs hélices discontinues, décalées angulairement entre elles.

Dans les divers exemples de réalisation illustrés sur les dessins, les obstacles **9** sont aménagés de manière identique pour l'ensemble des canaux **3.** Selon une autre variante de réalisation, les obstacles **9** réalisés dans au moins deux canaux **3** sont différents. Des obstacles **9** différents s'entendent comme des obstacles différents selon leur forme et/ou dimensions et/ou nombre et/ou orientation et/ou répartition le long de l'axe longitudinal. Selon cette variante de réalisation, il peut être envisagé de moduler dans les canaux, le rôle des promoteurs de turbulence pour permettre par exemple d'homogénéiser les contraintes à l'intérieur du support ou de tenir compte de la différence de pression intervenant entre les canaux en cas de circulation du fluide en boucle à l'intérieur du support.

Dans le cadre de l'invention, la fabrication du support poreux, voire de l'élément de séparation par flux tangentiel dans son entier, est réalisée grâce à une technique additive. Le procédé selon l'invention consiste à réaliser la structure tridimensionnelle du support par formation de strates élémentaires superposées et liées successivement entre elles de manière à faire croître progressivement la structure tridimensionnelle du support.

Le procédé a l'avantage, par rapport aux techniques antérieures, de réaliser le support en une seule étape de production ne nécessitant pas d'outillage, ni d'usinage, et donc de permettre l'accès à une plus grande gamme de géométries de support et permet de faire varier les formes et dimensions des obstacles dans les canaux.

Dans le cas de l'utilisation d'une matière solide telle qu'une poudre, l'épaisseur du lit de poudre et donc de chaque strate successivement consolidée est relativement faible pour permettre sa liaison à la strate inférieure, par application de l'apport d'énergie ou projection du liquide. En particulier, une épaisseur de 20 µm à 200 µm de poudre sera déposée, cette épaisseur étant fonction de la technique additive sélectionnée.

C'est la répétition de la séquence binaire qui permet, strate après strate, de construire la forme tridimensionnelle souhaitée. Le motif de consolidation peut varier d'une strate à l'autre. La croissance de la forme tridimensionnelle souhaitée est réalisée selon un axe de croissance choisi.

La granulométrie de la poudre déposée est un des facteurs qui détermine l'épaisseur minimum de chaque lit de poudre, ainsi que le diamètre moyen des pores final obtenu. En particulier, on utilisera une poudre de la matière destinée à constituer le support, par exemple une poudre d'oxyde métallique, voire une poudre de l'un de ses précurseurs. La poudre déposée présentera, par exemple, une taille moyenne de grains de l'ordre de 35 µm pour l'obtention d'un diamètre moyen de pores dans le support en céramique de l'ordre de 10 µm.

La demanderesse a constaté que le réglage de différents paramètres tels que le choix du matériau et, pour un matériau donné, la taille moyenne des grains de la poudre mise en œuvre, et, pour un matériau et une granularité donnés, l'épaisseur du lit de poudre répété couche après couche d'une part et le réglage de différents paramètres propres à la technologie choisie pour la consolidation permet l'obtention et la maîtrise d'une texture poreuse résiduelle interconnectée au sein du monolithe consolidé. Cette texture poreuse résiduelle est le résultat d'un frittage contrôlé des grains de poudre laissant des vides inter-granulaires interconnectés.

Dans le cas de l'utilisation d'un faisceau d'énergie, les principaux paramètres, sur lesquels il est possible d'agir, sont sa focalisation c'est-à-dire le diamètre du faisceau au niveau de l'impact avec le lit de poudre, la vitesse de balayage du lit de poudre par le faisceau de photons ou d'électrons ou encore le taux de recouvrement des surfaces d'impact du faisceau d'énergie lors de la constitution d'une strate.

Dans le cas de l'utilisation d'une projection de liquide, les principaux paramètres sur lesquels il est possible d'agir, sont le poids des gouttes, leur fréquence, la vitesse de balayage du lit de poudre par le « jet » de gouttes ou encore le taux de recouvrement lors de chaque passage.

La demanderesse a également constaté qu'il était possible, en modulant les différents paramètres précédemment décrits, d'ajuster la distribution en taille des pores et, pour chaque population de pores donnée, de maîtriser leur nombre et leur tortuosité.

Une fois la poudre agglomérée dans les zones sélectionnées, la matière non agglomérée est éliminée par toute technique appropriée. La fluidité initiale de la poudre utilisée facilite cette opération. Il est possible également d'utiliser des techniques de jet d'eau ou des vibrations pour se débarrasser des dernières traces de poudre restant en surface de la forme réalisée.

La consolidation finale de l'élément filtrant et l'état final de la texture poreuse sont, le plus souvent, obtenus par un ou plusieurs post-traitements thermiques qui ont pour objectif l'élimination des liants (déliantage) et/ou le frittage du matériau proprement dit. La température choisie pour un tel frittage final sera fonction de la nature du matériau inorganique utilisé et de la taille moyenne des grains de la poudre utilisée.

Le support, voire l'élément de séparation par flux tangentiel dans son entier, est ainsi réalisé strate après strate. Pour cela, en amont, grâce à un logiciel de conception par ordinateur, la structure tridimensionnelle du support ou de l'élément de séparation par flux tangentiel à réaliser, est découpée en tranches. L'objet virtuel en trois dimensions à réaliser est ainsi découpé en tranches bidimensionnelles de très fine épaisseur. Ces fines tranches vont alors être réalisées une à une, sous forme de strates élémentaires superposées et liées entre elles, de manière à faire croître progressivement la forme tridimensionnelle souhaitée.

Cette structure tridimensionnelle est réalisée :
- soit par la répétition des étapes suivantes :
   - réalisation d'un lit d'une matière solide (poudre organique ou inorganique) ou liquide (précurseur organique ou liquide dans lequel est dispersée une poudre qui peut être organique ou inorganique) destinée à former le support poreux, le lit étant d'épaisseur constante selon une surface supérieure à la section dudit support poreux prise au niveau de la strate ;
   - consolidation localisée selon un motif déterminé pour chaque strate, d'une partie de matière réalisée pour créer la strate élémentaire, et liaison simultanée de la strate élémentaire ainsi formée à la strate précédente ;
- soit par la création successive de cordons de matière formés suite à la fusion d'une poudre organique ou inorganique projetée dans le faisceau d'un laser selon le motif prédéterminé pour chaque strate ;
- soit par fusion continue ou discontinue (goutte) d'un fil d'un précurseur solide thermofusible. Quand le précurseur est un polymère organique thermofusible utilisé seul le support est de nature organique et immédiatement utilisable pour le dépôt d'une couche de nature organique. Quand le précurseur est un mélange d'un polymère organique thermofusible et d'une poudre inorganique céramique ou métallique, le support est, après élimination du polymère servant de liant et après frittage des grains de la poudre inorganique, de nature inorganique.

D'une manière générale dans le premier cas la matière utilisée est soit solide ou liquide et la consolidation des strates élémentaires est réalisée par un apport d'énergie ou par projection d'un liquide en fines gouttelettes. L'apport localisé d'énergie peut se faire avec un faisceau de lumière dirigé (LED ou LASER) ou un faisceau d'électrons dirigés, ou encore avec toute source d'énergie autorisant sa focalisation et un balayage du lit de poudre selon le motif sélectionné par CAO. L'interaction énergie-matière conduit alors, soit à un frittage, soit à une fusion/solidification de la matière, soit encore à une photo-polymérisation ou photo-réticulation de la matière, selon sa nature et celle de la source d'énergie utilisée.

L'apport localisé de liquide sur un lit de poudre peut se faire avec des microgouttelettes créées à l'aide d'un système piézo-électrique, éventuellement chargées et dirigées dans un champ électrostatique. Le liquide sera un liant ou un agent activateur du liant préalablement ajouté à la poudre céramique.

L'utilisation d'une technique additive envisagée dans le cadre de l'invention permet d'obtenir, par rapport aux techniques antérieures, d'une part, un gain en termes de fiabilité et cadence de production, et d'autre part une grande variabilité quant au choix des formes du support et des formes et reliefs qui peuvent être conformés dans le ou les canaux à l'intérieur du support.

Différentes techniques additives pouvant être utilisées, dans le cadre de l'invention, pour la conception de la forme tridimensionnelle, sont détaillées ci-après :

### La SLS (de l'anglais Selective Laser Sintering) ou SLM (de l'anglais Selective Laser Melting)

Avec cette technique, une poudre de la matière destinée à constituer le support ou l'élément de séparation par flux tangentiel, une poudre organique ou, de préférence, une poudre d'un matériau inorganique métallique ou céramique du type oxyde, nitrure ou carbure, voire une poudre de l'un de ses précurseurs, est déposée pour former un lit continu. Le faisceau d'un laser puissant est alors appliqué localement selon le motif sélectionné et permet d'agglomérer la poudre pour former la strate correspondant au support ou à l'élément de séparation, par flux tangentiel et la lier à la strate précédente par frittage. Sous l'effet de l'apport d'énergie localisé, les grains de la poudre fusionnent partiellement et se soudent entre eux, ce qui donne sa cohésion à la strate, réalisant ainsi un pré-frittage de la forme en cours de réalisation. Un nouveau lit de poudre est ensuite étalé et le processus recommence.

Le faisceau du laser balaye la surface de la poudre de manière à consolider la matière selon le motif souhaité, strate par strate. Ce balayage peut être réalisé en déplaçant le laser selon des trajectoires parallèles. Il peut être avantageux qu'il y ait un recouvrement de la surface d'impact du laser entre deux trajectoires parallèles successives. La quantité d'énergie reçue par le lit de poudre à l'endroit de l'impact du faisceau laser doit être telle que la fusion des grains de poudre reste partielle ou dans tous les cas que chaque grain fusionne suffisamment pour se lier avec ses plus proches voisins sans fermer la texture poreuse.

Les réglages de la machine dépendront donc, notamment, des caractéristiques intrinsèques du lit de poudre et de la nature du matériau déterminant l'efficience de l'interaction photons/matière.

A titre indicatif, les conditions correspondant aux gammes présentées dans le **TABLEAU 1** ci-dessous pourront être utilisées :

**TABLEAU 1**

| | Min | Max |
|---|---|---|
| Taille moyenne des grains de la poudre céramique | 10 µm | 100 µm |
| Epaisseur du lit de poudre | 40 µm | 200 µm |
| Puissance du Laser | 50 W | 1000 W |
| Vitesse de déplacement du laser | 0,5 m/s | 10 m/s |

En ajustant localement la focalisation du faisceau laser et/ou la vitesse de déplacement du faisceau, il est possible d'ajuster la quantité d'énergie reçue par le lit de poudre et donc d'ajuster la densification du matériau céramique obtenu et, de ce fait, sa texture poreuse. Il est ainsi possible d'obtenir, à certains endroits, une texture poreuse correspondant à celle souhaitée pour la couche séparatrice de filtration, et à d'autres, celle souhaitée pour le support.

Bien que le frittage soit réalisé au fur et à mesure de la conception du support ou de l'élément de séparation par flux tangentiel, par application du laser, une étape finale de frittage pourra être avantageusement réalisée, une fois la croissance du support ou de l'élément de séparation par flux tangentiel achevée, afin de libérer les contraintes mécaniques résiduelles et d'homogénéiser la texture poreuse. La température choisie pour un tel frittage final sera fonction de la nature du matériau inorganique utilisé et de la taille moyenne des grains de la poudre utilisée; par exemple, une température de 1300°C à 1500°C sera utilisée dans le cas de l'oxyde de titane.

Il est à noter que la fusion sélective de la poudre décrite ci-dessus peut être obtenue de manière analogue par un faisceau d'électrons correspondant à la technique EBM (Electron Beam Melting).

### L'impression 3D

Le principe reste le même, mais dans ce cas, les strates déposées peuvent correspondre à un mélange de poudre organique ou inorganique, céramique ou métallique, de la matière constitutive du support, voire d'un de ses précurseurs, avec un liant lui-même sous la forme d'une poudre ou enrobant la poudre inorganique elle-même. De préférence, ce mélange sera homogène et les particules de poudre de la matière constitutive du support, voire d'un de ses précurseurs, et celles du liant présenteront des tailles proches. A titre d'exemples de liants, on peut citer les résines furaniques, phénoliques et autres aminoplastes. Le pourcentage massique de liant sera compris entre 1 et 25% selon sa nature et le diamètre moyen de la poudre utilisé. Ensuite, un agent activateur du liant est projeté sous la forme de très fines gouttelettes selon le motif sélectionné et entraîne localement l'agglomération de la poudre. L'agent activateur peut être un solvant du liant, qui après séchage quasi-instantané, permet de lier par collage les particules inorganiques entre elles ou les emprisonne à l'intérieur d'un réseau solide.

Il est également possible de déposer uniquement une poudre organique ou inorganique, céramique ou métallique, de la matière destinée à constituer le support, voire une poudre de l'un de ses précurseurs, pour former un lit continu et ensuite de projeter localement un liant qui sera alors une colle liquide à séchage rapide ou une résine liquide thermodurcissable.

La projection de liant ou d'agent activateur qui se trouve sous forme liquide est réalisée selon tout dispositif approprié, notamment un système piézo-électrique utilisé dans les imprimantes du type jet d'encre avec un balayage qui peut être réalisé en déplaçant la tête d'impression selon des trajectoires parallèles. Il peut être avantageux qu'il y ait un recouvrement de la surface d'impact des gouttes entre deux trajectoires parallèles successives.

Après élimination de la poudre non agglomérée, le liant est éliminé lors du traitement thermique de frittage, ce déliantage étant terminé le plus souvent avant 500°C.

L'impression 3D permet, avec des tailles moyennes des grains de la poudre céramique comprises entre 30 et 100 µm de réaliser des épaisseurs du lit de poudre entre 80 et 300 µm et d'atteindre des vitesses de construction linéaire de la forme souhaitée comprises entre 25 et 100 mm/heure.

### La LCM (Lithography-based Ceramic Manufacturing)

La LCM est une technique pour laquelle la poudre céramique est pré-mélangée à une résine photo-polymérisable, la consolidation par polymérisation étant obtenue avec une source de lumière LED ou LASER. Comme pour les techniques précédemment décrites, il est nécessaire de supprimer la poudre non réticulée avant le cycle thermique de frittage qui permet le déliantage c'est-à-dire l'élimination de la résine photo-polymérisable puis le frittage proprement dit.

L'utilisation de la LCM est limitée, de par le fait que, les grains de poudre doivent être transparents aux longueurs d'ondes considérées pour une polymérisation en volume sous et autour de l'impact lumineux.

### Le FDM (Fused Déposition Modeling)

Le FDM est une technique utilisant un polymère organique solide thermo fusible auquel est ajoutée éventuellement une poudre inorganique. Cette technique vise à créer des dépôts successifs de cordons de matière à partir d'un fil ou d'un ruban. Le cordon de matière est réalisé par ramollissement ou fusion continue (extrusion) ou discontinue (goutte) de l'extrémité du fil ou du ruban. A l'inverse des techniques précédentes, il n'y a pas formation d'un lit de matière préalable. La consolidation des strates ou cordons de matière est réalisée par chauffage.

Selon une variante à cette technique, il peut être prévu de projeter une poudre inorganique pour assurer la création successive de cordons de matière, cette poudre projetée dans un faisceau d'un laser fusionnant avant l'impact.

### La Stéréolithographie (Stereolithography Apparatus SLA)

Cette technique, similaire dans le principe aux techniques précédentes, utilise une matière liquide tel un précurseur liquide photodurcissable dans lequel est incorporée une poudre inorganique. Le faisceau de photons (LED ou laser) balaye la couche de liquide et la polymérise localement.

Dans le cas de l'impression 3D ou de la LCM, la ou les couches séparatrices de filtration seront déposées une fois le support constitué, après l'opération finale de frittage. Le dépôt d'une couche séparatrice, notamment à la surface des canaux et des obstacles dans ces canaux du support consistera à déposer sur ce dernier une suspension contenant au moins une composition frittable destinée, après cuisson, à constituer une couche filtrante. Une telle composition présente une constitution classiquement utilisée dans la production des membranes inorganiques de filtration. Cette composition contient au moins un oxyde, un nitrure, un carbure, ou un autre matériau céramique ou un de leur mélange, les oxydes, nitrures et carbures métalliques étant préférés. La composition frittable est mise en suspension, par exemple, dans de l'eau. Pour éliminer le risque de présence d'agrégats et pour optimiser la dispersion des grains dans le liquide, la suspension obtenue est broyée, afin de détruire les agrégats et obtenir une composition composée essentiellement de particules élémentaires. La rhéologie de la suspension est ensuite ajustée avec des additifs organiques pour satisfaire aux exigences hydrodynamiques de pénétration dans les canaux des supports. La couche une fois déposée, celle-ci est séchée, puis frittée à une température qui dépend de sa nature, de la taille moyenne de ses grains et du seuil de coupure visé.

Dans le cas de la SLS ou de la SLM, la ou les couches séparatrices de filtration peuvent être générées simultanément avec la croissance du support ou bien déposées ultérieurement selon les méthodes de dépôt classiques utilisées dans la production de membrane. Là encore, la ou les couches séparatrices de filtration peuvent être déposées à partir de suspensions de particules de la matière inorganique à déposer, ou d'un de ses précurseurs. De telles suspensions sont classiquement utilisées dans la production des éléments de filtration céramiques. Cette ou ces couches sont soumises après séchage à une opération de frittage qui permet de les consolider et de les lier à la surface sur laquelle elles sont déposées. La granulométrie des particules présentes dans la suspension sera fonction de la texture poreuse souhaitée au final pour la couche séparatrice de filtration.

Les exemples, ci-après, illustrent l'invention, mais n'ont aucun caractère limitatif.

Des éléments tabulaires de séparation par flux tangentiel, du type de celui présenté sur les Figures, sont fabriqués conformément à l'invention. Le support se présente sous la forme d'un tube de 300 mm à 1200 mm de long, dont la section droite transversale est circulaire, et présente un diamètre de 10 mm à 42 mm et dans lequel plusieurs canaux rectilignes parallèles à l'axe du tube sont aménagés.

### Exemple 1 : SLS / support seul

| Matériau | Oxyde de titane |
|---|---|
| Taille moyenne des grains de la poudre | 35-45 µm |
| Epaisseur du lit de poudre | 50 µm |
| Focalisation (diamètre du faisceau laser au point d'impact avec la poudre) | 240 µm |
| Atmosphère de la chambre | Air |
| Puissance du laser | 200 W |
| Vitesse de déplacement du laser | 0,8 m/s |
| % de recouvrement entre deux passages du laser | 15 - 25 % |
| Température du frittage final | 1380°C |
| Durée du palier à 1380°C | 2 heures |
| Diamètre moyen de pores obtenu | 20-30 µm |

### Exemple 2 : SLS / support + couche

| Matériau | Oxyde de titane | |
|---|---|---|
| Taille moyenne des grains de la poudre | 25-35µm | |
| Epaisseur du lit de poudre | 40 µm | |
| Focalisation (diamètre du faisceau laser au point d'impact avec la poudre) | 120 µm | |
| Atmosphère de la chambre | Air | |
| Puissance du laser | 200 W | |
| | Support | Couche séparatrice |
| Vitesse de déplacement du laser | 0,8 m/s | 1 m/s |
| % de recouvrement entre deux passages du laser | 15 - 25 % | |
| Température du frittage final | 1380°C | |
| Durée du palier à 1380°C | 2 heures | |
| Diamètre moyen de pores obtenu | 20-30 µm | 1-2 µm |

### Exemple 3 : SLS / support seul

| Matériau | Carbure de silicium |
|---|---|
| Taille moyenne des grains de la poudre | 75-80 µm |
| Epaisseur du lit de poudre | 120 µm |
| Focalisation (diamètre du faisceau laser au point d'impact avec la poudre) | 120 µm |
| Atmosphère de la chambre | Argon |
| Puissance du laser | 200 W |
| Vitesse de déplacement du laser | 0,6 m/s |
| % de recouvrement entre deux passages du laser | 30 - 35 % |
| Diamètre moyen de pores obtenu | 25-30 µm |

Dans ce cas, aucun frittage final n'est nécessaire.

### Exemple 4 : Impression 3D

| Matériau | Oxyde de titane |
|---|---|
| Taille moyenne des grains de la poudre | 30-35 µm |
| Epaisseur du lit de poudre | 80 µm |
| Type de liant | Résine furanique |
| % de liant | 20 % |
| Vitesse de construction linéaire de la forme | 30 mm/h |
| Température du frittage final | 1500 °C |
| Durée du palier à 1500°C | 6 heures |
| Diamètre moyen de pores obtenu | 10-12 µm |

Dans le cas des exemples 1, 3 et 4, la fabrication de l'élément de séparation par flux tangentiel est complétée par le dépôt d'une couche séparatrice à la surface des canaux réalisée à partir de la suspension suivante.

### Préparation de la suspension par broyage en broyeur à boulets

| Matériau | Oxyde de titane |
|---|---|
| Taille moyenne des grains de la poudre avant broyage | 3,6 µm |
| Ratio Oxyde de titane / eau | 0,4 |
| Durée du broyage | 5 heures |
| Taille moyenne des grains de la poudre après broyage | 1 µm |
| Ajout d'eau pour réglage de la rhéologie | 200 à 400 centipoises |

Une couche séparatrice de microfiltration ayant un seuil de coupure de 1,4 µm est obtenue après un dépôt direct sur le support de la manière suivante.

On fait pénétrer, par pompage, la suspension dans les canaux pour la mettre en contact avec la surface des canaux. Le mécanisme moteur du dépôt est l'attraction du liquide de la suspension par la porosité du support poreux.

L'épaisseur du dépôt de particules d'oxyde de titane en surface et donc la masse déposée par unité de surface dépend du temps de séjour de la suspension dans les canaux du support.

| | |
|---|---|
| Temps de séjour de la suspension dans les canaux | 30 secondes |
| Masse déposée | 50 à 60 g/m² |

L'opération est répétée deux fois pour une masse déposée finale de 110 g/m² environ.

### Cycle de cuisson pour un frittage de la couche

| | |
|---|---|
| Vitesse de montée en température jusqu'à 1200°C | 100°C/heure |
| Durée du palier à 1200°C | 1 heure |
| Refroidissement naturel | |

La fabrication d'éléments de séparation par flux tangentiel de microfiltration avec des seuils de coupures inférieurs à 1,4 µm et des éléments de séparation, par flux tangentiel d'ultrafiltration et de nanofiltration seront obtenus par dépôts successifs sur une telle première couche à partir de suspensions plus fines avec des cycles thermiques adaptés.

L'invention n'est pas limitée aux exemples décrits et représentés car diverses modifications peuvent y être apportées sans sortir de son cadre.

## Revendications

1. Elément de séparation par flux tangentiel d'un milieu fluide à traiter en un filtrat et un rétentat, ledit élément de séparation comportant un support poreux rigide monolithique (**2**) de structure rectiligne, dans lequel sont aménagés plusieurs canaux (**3**) pour la circulation du milieu fluide à traiter entre une entrée (**6**) et une sortie (**7**) pour le rétentat, les parois internes (**3₁**) des canaux (**3**) étant continument recouverte par au moins une couche séparatrice de filtration (**4**) en vue de récupérer un filtrat au niveau de la surface extérieure (**5**) du support, **caractérisé en ce que** le support poreux rigide monolithique (**2**) délimite, à partir des parois internes (**3₁**) desdits canaux, des obstacles (**9**) à la circulation du fluide à traiter qui présentent une identité de matériau et de texture poreuse avec le support ainsi qu'une continuité de matériau et de texture poreuse avec le support de sorte que lesdits obstacles font partie intégrante du support, les obstacles (**9**) générant des variations selon l'axe longitudinal d'au moins l'un des trois critères suivants : l'aire de la section droite, la forme de la section droite, les dimensions de la section droite des canaux.

2. Elément de séparation par flux tangentiel selon la revendication 1, comportant au moins une couche séparatrice (**4**) continûment déposée sur les parois internes (**3₁**) des canaux (**3**) et venant recouvrir entièrement les obstacles (**9**).

3. Elément de séparation par flux tangentiel selon la revendication 1 ou 2, dans lequel les obstacles (**9**) correspondent à des reliefs discontinus aménagés sur les parois internes des canaux.

4. Elément de séparation par flux tangentiel selon l'une des revendications 1 à 3, dans lequel les obstacles (**9**) ont leur surface de contact pour le fluide à filtrer située vers l'entrée qui est inclinée dans le sens de circulation du fluide à traiter.

5. Elément de séparation par flux tangentiel selon l'une des revendications 1 à 4, dans lequel le support poreux rigide monolithique (**2**) est réalisé en un matériau organique ou inorganique.

6. Elément de séparation par flux tangentiel selon l'une des revendications 1 à 4, comportant un support poreux rigide monolithique (**2**) et au moins une couche séparatrice (**4**) continûment déposée sur les parois internes (**3₁**) des canaux (**3**) et venant recouvrir entièrement les obstacles, chacun constitués d'une céramique, choisi parmi les oxydes, les nitrures, les carbures ou d'autres matériaux céramiques et leur mélanges, et, en particulier, d'oxyde de titane, d'alumine, de zircone ou d'un de leur mélange, de nitrure de titane, de nitrure d'aluminium, de nitrure de bore, de carbure de silicium éventuellement en mélange avec un autre matériau céramique.

7. Elément de séparation par flux tangentiel selon l'une des revendications 1 à 6, dans lequel le support poreux rigide monolithique (**2**) présente un diamètre moyen de pores appartenant à la gamme allant de 4 µm à 40 µm.

8. Elément de séparation par flux tangentiel selon la revendication 7, dans lequel le diamètre moyen de pores correspond à la valeur d50 de la distribution volumique, pour laquelle 50% du volume total des pores correspondent au volume des pores de diamètre inférieur à ce d50 ; la distribution volumique étant obtenue par pénétration de mercure, par exemple selon la technique décrite dans la norme ISO 15901-1 :2005.

9. Elément de séparation par flux tangentiel selon l'une des revendications 1 à 8, dans lequel la surface extérieure (**5**) du support poreux rigide monolithique (**2**) présente un profil constant.

10. Elément de séparation par flux tangentiel selon l'une des revendications 1 à 9, dans lequel les obstacles (**9**) réalisés dans au moins deux canaux sont différents.

11. Procédé de fabrication d'un élément de séparation par flux tangentiel selon l'une des revendications 1 à 10, dans lequel la structure tridimensionnelle du support poreux rigide monolithique (**2**) est réalisée par technique additive par formation de strates élémentaires superposées et liées successivement entre elles, de manière à faire croître progressivement la forme tridimensionnelle souhaitée.

12. Procédé selon la revendication 11, **caractérisée en ce qu'**il consiste à réaliser la structure dimensionnelle, par répétition des étapes suivantes :
- réalisation d'un lit continu d'une matière destinée à former le support poreux rigide monolithique (**2**), le lit étant d'épaisseur constante selon une surface supérieure à la section dudit support poreux rigide monolithique (**2**) prise au niveau de la strate ;
- consolidation localisée selon un motif déterminé pour chaque strate, d'une partie de matière réalisée pour créer la strate élémentaire, et liaison simultanée de la strate élémentaire ainsi formée à la strate précédente.

13. Procédé de fabrication selon l'une des revendications 11 à 12, consistant à réaliser un lit continu d'une matière solide se présentant sous la forme d'une poudre organique ou inorganique.

14. Procédé de fabrication selon la revendication 11, consistant à réaliser un lit continu d'un milieu se présentant sous la forme d'un précurseur liquide photopolymérisable dans lequel a été disposée une poudre inorganique.

15. Procédé de fabrication selon la revendication 11, dans lequel chaque strate est réalisée par fusion continue ou discontinue d'un fil d'un précurseur solide thermofusible qui est soit un polymère organique thermofusible utilisé seul avec un support organique et une couche organique, ou soit un mélange d'un polymère organique thermofusible et d'une poudre inorganique céramique, avec un support de nature inorganique.

16. Procédé de fabrication selon la revendication 11, consistant à créer successivement des cordons de matière par projection d'une poudre fondue dans le faisceau d'un laser.

## Patentansprüche

1. Element zur Trennung mittels Tangentialströmung eines zu behandelnden Fluidmediums in ein Filtrat und ein Retentat, wobei das Trennelement einen porösen, starren, einstückigen Träger (2) mit geradliniger Struktur beinhaltet, wobei mehrere Kanäle (3) zur Zirkulation des zu behandelnden Fluidmediums zwischen einem Eingang (6) und einem Ausgang (7) für das Retentat vorgesehen sind, wobei die Innenwände (3₁) der Kanäle (3) durchgehend mit zumindest einer Trennschicht zur Filtration (4) bedeckt sind, um ein Filtrat an der äußeren Oberfläche (5) des Trägers zu gewinnen, **dadurch gekennzeichnet, dass** der poröse, starre, einstückige Träger (2) ausgehend von den Innenwänden (3₁) der Kanäle Hindernisse (9) für die Zirkulation des zu behandelnden Fluids begrenzt, die mit dem Träger in Material und poröser Textur identisch sind sowie in Bezug auf Material und poröse Struktur den Träger durchgehend fortsetzen, auf solche Weise, dass die Hindernisse einen integralen Teil des Trägers bilden, wobei die Hindernisse (9) entlang der Längsachse Variationen zumindest eines der drei folgenden Kriterien erzeugen: der Fläche des Profilschnitts, der Form des Profilschnitts, der Abmessungen des Profilschnitts der Kanäle.

2. Element zur Trennung mittels Tangentialströmung nach Anspruch 1, das zumindest eine Trennschicht (4) beinhaltet, die durchgehend auf den Innenwänden (3₁) der Kanäle (3) abgeschieden ist und die Hindernisse (9) vollständig bedeckt.

3. Element zur Trennung mittels Tangentialströmung nach Anspruch 1 oder 2, wobei die Hindernisse (9) nicht durchgehenden Reliefs entsprechen, die an den Innenwänden der Kanäle vorgesehen sind.

4. Element zur Trennung mittels Tangentialströmung nach einem der Ansprüche 1 bis 3, wobei die Hindernisse (9) ihre Kontaktoberfläche für das zu filtrierende Fluid zu dem Eingang hin angeordnet haben, der in der Richtung der Zirkulation des zu behandelnden Fluids geneigt ist.

5. Element zur Trennung mittels Tangentialströmung nach einem der Ansprüche 1 bis 4, wobei der poröse, starre, einstückige Träger (2) aus einem organischen oder anorganischen Material verwirklicht ist.

6. Element zur Trennung mittels Tangentialströmung nach einem der Ansprüche 1 bis 4, das einen porösen, starren, einstückigen Träger (2) und zumindest eine Trennschicht (4), die durchgehend auf den Innenwänden (3₁) der Kanäle (3) abgeschieden ist und die Hindernisse vollständig bedeckt, beinhaltet, wobei jede davon aus einer Keramik, ausgewählt aus den Oxiden, Nitriden, Karbiden oder anderen keramischen Materialien und deren Mischungen, gebildet wird, und insbesondere aus Titanoxid, Aluminiumoxid, Zirkonoxid oder einer ihrer Mischungen, aus Titannitrid, aus Aluminiumnitrid, aus Bornitrid, aus Siliziumnitrid, eventuell in Mischung mit einem weiteren keramischen Material.

7. Element zur Trennung mittels Tangentialströmung nach einem der Ansprüche 1 bis 6, wobei der poröse, starre, einstückige Träger (2) einen mittleren Porendurchmesser aufweist, der in den Bereich von 4 µm bis 40 µm fällt.

8. Element zur Trennung mittels Tangentialströmung nach Anspruch 7, wobei der mittlere Porendurchmesser dem Wert d50 der Volumenverteilung entspricht, für welchen 50 % des Gesamtvolumens der Poren dem Volumen der Poren mit einem Durchmesser unter diesem d50 entsprechen, wobei die Volumenverteilung durch Quecksilberintrusion erhalten wird, zum Beispiel gemäß der in der Norm ISO 15901-1:2005 beschriebenen Technik.

9. Element zur Trennung mittels Tangentialströmung nach einem der Ansprüche 1 bis 8, wobei die äußere Oberfläche (5) des porösen, starren, einstückigen Trägers (2) ein konstantes Profil aufweist.

10. Element zur Trennung mittels Tangentialströmung nach einem der Ansprüche 1 bis 9, wobei die Hindernisse (9), die in zumindest zwei Kanälen verwirklicht sind, sich unterscheiden.

11. Verfahren zur Herstellung eines Elements zur Trennung mittels Tangentialströmung nach einem der Ansprüche 1 bis 10, wobei die dreidimensionale Struktur des porösen, starren, einstückigen Trägers (2) durch eine additive Technik durch Bildung von elementaren Schichten, die übereinandergelagert und der Reihe nach miteinander verbunden werden, verwirklicht wird, auf eine Weise, um die gewünschte dreidimensionale Form progressiv wachsen zu lassen.

12. Verfahren nach Anspruch 11, **dadurch gekennzeichnet, dass** es darin besteht, die dreidimensionale Struktur durch Wiederholung der folgenden Schritte zu verwirklichen:
- Verwirklichung eines durchgehenden Betts aus einem Material, das dazu bestimmt ist, den porösen, starren, einstückigen Träger (2) zu bilden, wobei das Bett eine konstante Dicke aufweist, gemäß einer oberen Oberfläche an dem Querschnitt des porösen, starren, einstückigen Trägers (2), der auf Höhe der Schicht genommen wird,
- lokalisierte Verfestigung, gemäß einem bestimmten Muster für jede Schicht, eines Teils des verwirklichten Materials, um die elementare Schicht zu erzeugen, und gleichzeitige Verbindung der so gebildeten elementaren Schicht mit der zuvor gebildeten Schicht.

13. Herstellungsverfahren nach einem der Ansprüche 11 bis 12, das darin besteht, ein durchgehendes Bett aus einem festen Material zu verwirklichen, das in Form eines organischen oder anorganischen Pulvers vorliegt.

14. Herstellungsverfahren nach Anspruch 11, das darin besteht, ein durchgehendes Bett aus einem Medium zu verwirklichen, das in Form eines flüssigen, fotopolymerisierbaren Vorläufers vorliegt, in welchem ein anorganisches Pulver angeordnet ist.

15. Verfahren zur Herstellung nach Anspruch 11, wobei jede Schicht durch kontinuierliches oder diskontinuierliches Schmelzen eines Fadens aus einem festen, wärmeschmelzbaren Vorläufer verwirklicht wird, der entweder ein organisches, wärmeschmelzbares Polymer, das einzeln mit einem organischen Träger und einer organischen Schicht verwendet wird, oder eine Mischung aus einem organischen, wärmeschmelzbaren Polymer und einem anorganischen, keramischen Pulver mit einem Träger anorganischer Art ist.

16. Herstellungsverfahren nach Anspruch 11, das darin besteht, der Reihe nach Stränge des Materials zu erzeugen, durch Projektion eines geschmolzenen Pulvers in den Strahl eines Lasers.

## Claims

1. A tangential flow separator element for separating a fluid medium for treatment into a filtrate and a retentate, said separator element comprising a monolithic rigid porous support (2) of rectilinear structure with a plurality of channels (3) formed therein for passing a flow of the fluid medium for treatment between an inlet (6) and an outlet (7) for the retentate, the inside walls (3₁) of the channels (3)being continuously recovered by at least one separator layer (4) in order to recover a filtrate from the outside surface (5) of the support, **characterized in that** the monolithic rigid porous support (2) defines obstacles (9) to the flow of the fluid for treatment, which obstacles extend from the inside walls (3₁) of said channels, are identical in material and porous texture to the support, and present continuity of material and of porous texture with the support such that the obstacles form an integral portion of the support, the obstacles (9) generating variations along the longitudinal axis of at least one of the following three criteria: the area of the right section, the shape of the right section, the dimensions of the right section.

2. A tangential flow separator element according to claim 1, comprising at least one separator layer (4) deposited continuously on the inside walls (3₁) of the channels (3) and completely covering the obstacles (9).

3. A tangential flow separator element according to claim 1 or claim 2, wherein the obstacles (9) correspond to discontinuous portions formed on the inside walls of the channels.

4. A tangential flow separator element according to any one of claims 1 to 3, wherein the obstacles (9) have their surface that is for coming into contact with the fluid for filtering and that faces towards the inlet sloping in the flow direction of the fluid for treatment.

5. A tangential flow separator element according to any one of claims 1 to 4, wherein the monolithic rigid porous support (2) is made of a material that is organic or inorganic.

6. A tangential flow separator element according to any one of claims 1 to 4, comprising a monolithic rigid porous support (2) and at least one separator layer (4) continuously deposited on the inside walls (3₁) of the channels (3) and completely covering the obstacles, each being constituted of a ceramic selected from oxides, nitrides, carbides, or other ceramic materials, and mixtures thereof, and in particular titanium oxide, alumina, and zirconia, or a mixture thereof, titanium nitride, aluminum nitride, boron nitride, and silicon carbide, optionally mixed with another ceramic material.

7. A tangential flow separator element according to any one of claims 1 to 6, wherein the monolithic rigid porous support (2) presents a mean pore diameter lying in the range 4 µm to 40 µm.

8. A tangential flow separator element according to claim 7, wherein the mean pore diameter corresponds to a d50 value for the volume distribution at which 50% of the total volume of the pores corresponds to the volume of the pores having a diameter less than the d50 value; the volume distribution being obtained by mercury penetration, e.g. by using the technique described in ISO standard 15901-1:2005.

9. A tangential flow separator element according to any one of claims 1 to 8, wherein the outside surface (5) of the monolithic rigid porous support (2) presents a profile that is constant.

10. A tangential flow separator element according to any one of claims 1 to 9, wherein the obstacles (9) made in at least two of the channels are different.

11. A method of fabricating a tangential flow separator element according to any one of claims 1 to 10, wherein the three-dimensional structure of the monolithic rigid porous support (2) is made thanks to an additive technique by forming individual plies that are superposed and successively bonded to one another so as to build up the desired three-dimensional shape progressively.

12. A method according to claim 11, **characterized in that** it consists in making the three-dimensional structure by repeating the following steps:
• making a continuous bed of a material that is to form the monolithic rigid porous support (2), the bed being of constant thickness over an area greater than the section of said monolithic rigid porous support (2) at the ply;
• locally consolidating some of the material to form a pattern that is determined for each ply, so as to create the individual ply while simultaneously bonding the individual ply as made in this way to the preceding ply.

13. A fabrication method according to one of claims 11 to 12, consisting in making a continuous bed of a solid material in the form of an organic or inorganic powder.

14. A fabrication method according to claim 11, consisting in making a continuous bed of a medium in the form of a photopolymerizable liquid precursor having an inorganic powder disposed therein.

15. A fabrication method according to claim 11, wherein each ply is made by continuous or discontinuous melting of a string of a thermofusible solid precursor that is either a thermofusible organic polymer used on its own with an organic support and an organic layer, or else a mixture of a thermofusible organic polymer and of a ceramic inorganic powder, with a support of inorganic nature.

16. A fabrication method according to claim 11, consisting in creating successive beads of material by spraying a powder that is melted in a laser beam.
